# EUROPEAN PATENT APPLICATION

(11) **EP 2 077 070 A2**
(43) Date of publication of application: **08.07.2009**
(21) Application number: 09075186.8
(22) Date of filing: 24.11.2004
(51) Int. Cl.: A01K 1/12, A01K 1/00

(54) **An assembly for and a method of managing a herd of animals moving about freely**

(30) Priority: 12.12.2003 NL 1024997
(62) Divisional of application: 04078196.5
(71) Applicant: Lely Enterprises AG, 6300 Zug (CH)
(72) Inventor: Van den Berg, Karel, 2971 VB Bleskensgraaf (NL)
(74) Representative: Corten, Maurice Jean F.M.

(57) **Abstract**

An assembly for managing a herd of animals moving about freely. The assembly is provided with an animal receiving area surrounded by an enclosure. The enclosure is provided with a gate. A milking station is arranged in the surrounded area and has a milking device for detecting whether an animal has been milked and for emitting a milking signal. An animal recognition system determines the identity of an animal and emits an animal recognition signal. A control unit controls the functioning of the gate with the aid of the animal recognition signal. The control unit is suitable for opening the gate, in order that an animal can leave the surrounded area only when the milking signal indicates that the animal has been milked.

## Description

The invention relates to an assembly for managing a herd of animals moving about freely according to the preamble of claim 1.

Such an assembly is known from WO 96/19916. In this known assembly, the control unit controls the gate in such a way that, when it has been found, for example, that an animal has not been milked, the animal is led from the enclosed area to a separation area. In said separation area the animal can then be milked manually. Although this known assembly functions properly, the number of times a farmer has to go to the separation area to milk an animal manually is found to be relatively large, taking up an unnecessarily large part of his time. This may also have an adverse effect on the number of times an animal can be milked per day, resulting in a reduced milk production.

The invention aims inter alia at providing an assembly for managing a herd of animals moving about freely by means of which the above-mentioned drawbacks are solved at least partially.

To this end, an assembly for managing a herd of animals moving about freely of the above described type according to the invention comprises the measures of the characterizing part of claim 1. The invention is based on the insight that, if an animal, in case of a non-successful milking, is offered again the possibility to visit the milking station, the chance of a successful milking of the animal is increased. The number of times an animal is led into the separation area is thus reduced. According to the invention, the animal can leave the surrounded area only when she has been milked, and the animal can walk freely from the feeding device to the milking station. Owing to the fact that, in an embodiment of an assembly according to the invention, a feeding device is provided in the surrounded area, a longer stay in the surrounded area without harmful consequences is possible.

In an embodiment of an assembly according to the invention, the feeding device is provided with a feed measuring device for detecting whether an animal has eaten and for emitting an eating signal, and the control unit is suitable for opening the gate, in order that an animal can leave the surrounded area when also the eating signal indicates that the animal has eaten. In particular if the feed supplied is concentrate or the like, this provides the possibility to ensure that the animal only leaves the surrounded area when she has not only been milked but has also consumed feed.

In an embodiment of an assembly according to the invention, the control unit is suitable for determining the time elapsed since the milking of the animal, and the control unit is suitable for opening the gate, in order that an animal can leave the surrounded area when also the time elapsed is longer than or equal to a threshold time. By properly selecting the threshold time, for example in the order of 30 minutes, it will be possible for the teat openings, the so-called teat orifices, of the animal to close before the animal can leave the surrounded area via the gate.

The threshold time is in particular animal-dependent, so that it is possible, for example, to take into account the period of time, varying per animal, within which the teat orifices will close.

In a favourable embodiment of an assembly according to the invention, the milking station is provided with connection means for automatically connecting a teat cup to a teat of an animal.

In a further embodiment of an assembly according to the invention, the milking device is suitable for determining the number of times an animal has successively entered the milking station without a successful milking has been achieved, and for emitting a sum signal indicative of that number. In another embodiment, the control unit is suitable for emitting a warning signal when said sum signal indicates that the number of times the milking station has been entered is larger than a particular threshold number. Said warning signal can be sent, for example by telephone or by internet or an equivalent system, for example to the farmer who is then able to visit the cow in question. It is pointed out here that the animal remains in the surrounded area.

The invention also relates to an assembly for managing a herd of animals moving about freely, which assembly is provided with an animal receiving area surrounded by an enclosure, the enclosure being provided with a gate, with a feeding device arranged in the surrounded area for automatically supplying feed to an animal, with an animal recognition system for determining the identity of an animal and for emitting an animal recognition signal, and with a control unit for controlling the functioning of the gate with the aid of the animal recognition signal, characterized in that the feeding device is provided with a feed measuring device for detecting whether an animal has eaten and for emitting an eating signal, and in that the control unit is suitable for opening the gate, in order that an animal can leave the surrounded area only when the eating signal indicates that the animal has eaten. In particular if the feed supplied is concentrate or the like, this provides the possibility to ensure that the animal leaves the surrounded area only when she has consumed feed.

In a preferred embodiment of an assembly according to the invention, the feed measuring device is suitable for determining the amount of feed consumed by an animal, and the control unit is suitable for opening the gate, in order that an animal can leave the surrounded area only when the amount of feed consumed is larger than or equal to a threshold amount. This provides the possibility to ensure that an animal consumes a sufficient amount of feed before leaving the surrounded area.

The threshold amount is in particular animal-dependent, so that it is possible to take individual animal feeding into account.

The invention further relates to an assembly for managing a herd of animals moving about freely, which assembly is provided with an animal receiving area surrounded by an enclosure, the enclosure being provided with a gate, with a treatment device arranged in the surrounded area for performing a treatment on an animal, with an animal recognition system for determining the identity of an animal and for emitting an animal recognition signal, and with a control unit for controlling the functioning of the gate with the aid of the animal recognition signal, characterized in that the treatment device is provided with a treatment detecting device for detecting whether an animal has undergone the treatment and for emitting a treatment signal, and in that the control unit is suitable for opening the gate, in order that an animal can leave the surrounded area only when the treatment signal indicates that the animal has undergone the treatment. This aspect of the invention is based on the insight that the invention may be applied, besides to milking and feeding, to other treatments, in particular automatic treatments, such as, for example, leg treatment, administration of medicine, weighing of an animal, and the like.

In a preferred embodiment of an assembly according to the invention, the assembly is provided with a surrounded resting area with cubicles, the gate being located between the surrounded area and the surrounded resting area for the purpose of providing an animal access to the resting area.

The assembly is preferably provided with a one-way gate for providing access to the surrounded area from the resting area, the one-way gate providing in particular free access to the surrounded area for all the animals.

The invention also relates to a method of managing a herd of animals moving about freely, the method comprising the step of receiving animals in an area surrounded by an enclosure, which enclosure is provided with a gate, the step of milking an animal in a milking station arranged in the surrounded area, the step of automatically supplying feed to an animal by means of a feeding device arranged separately from the milking station in the surrounded area, the step of determining the identity of an animal, and the step of controlling the functioning of the gate with the aid of the animal recognition signal, characterized in that the step of controlling the functioning of the gate comprises the opening of the gate, in order that an animal can leave the surrounded area only when the animal has been milked.

Preferred embodiments of a method according to the invention are described in the relevant sub-claims.

The invention further relates to a method of managing a herd of animals moving about freely, the method comprising the step of receiving animals in an area surrounded by an enclosure, which enclosure is provided with a gate, the step of automatically supplying feed to an animal by means of a feeding device arranged in the surrounded area, the step of determining the identity of an animal, and the step of controlling the functioning of the gate with the aid of the animal recognition signal, characterized in that the step of controlling the functioning of the gate comprises the opening of the gate, in order that an animal can leave the surrounded area only when the animal has eaten.

Preferred embodiments of a method according to the invention are described in the relevant sub-claims.

The invention also relates to a method of managing a herd of animals moving about freely, the method comprising the step of receiving animals in an area surrounded by an enclosure, which enclosure is provided with a gate, the step of automatically performing a treatment on an animal by means of a treatment device arranged in the surrounded area, the step of determining the identity of an animal, and the step of controlling the functioning of the gate with the aid of the animal recognition signal, characterized in that the step of controlling the functioning of the gate comprises the opening of the gate, in order that an animal can leave the surrounded area only when the animal has undergone the treatment.

Preferred embodiments of a method according to the invention are described in the relevant sub-claims.

The invention will be elucidated hereinafter with reference to an exemplary embodiment shown in the figure.

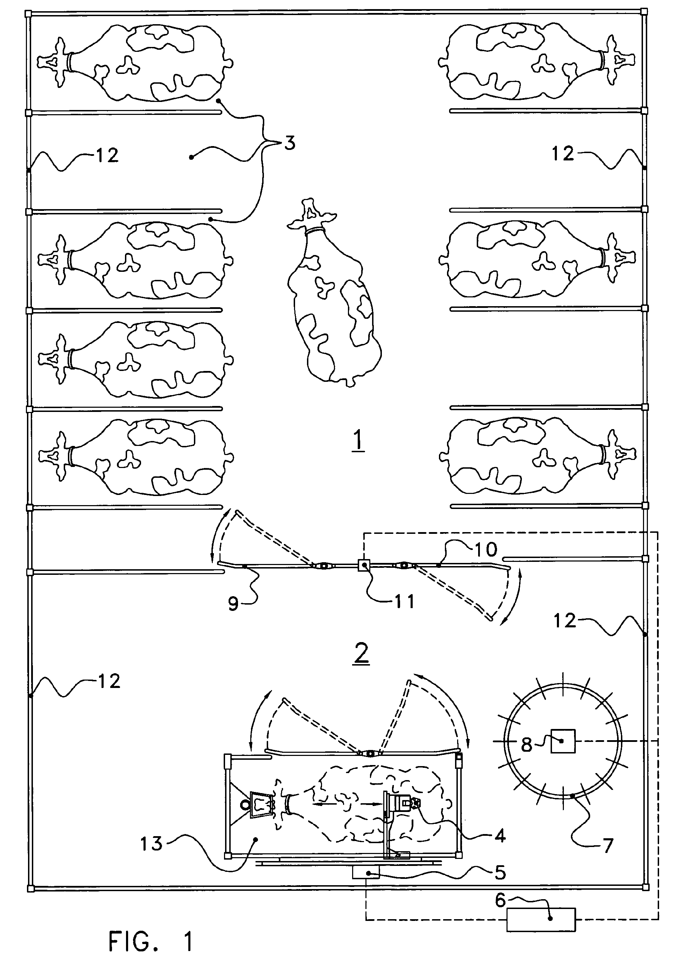

Figure 1 is a schematic plan view of an assembly according to the invention. The assembly constitutes part of a farm comprising a first area 1 for containing a herd of animals. Said first area may be a surrounded area comprising inter alia a number of cubicles 3. The first area may also comprise a pasture where the herd is allowed to move about freely.

The farm further comprises an area 2 surrounded by an enclosure 12, which area 2 is always accessible, via a one-way gate 9, for animals present in the first area 1. The enclosure 12 is further provided with a gate 10 capable of being operated by a control unit 11, which control unit 11 comprises an animal recognition unit constituting part of an animal recognition system, through which gate 10 animals can reach the first area 1 from the surrounded area 2. It is pointed out that, although the figure shows two one-way gates, any other number of gates is applicable within the invention, the arrangement being such that at any rate the gate providing animals access to the first area 1 from the surrounded area 2 is capable of being operated with the aid of animal recognition data. Therefore, it is also possible that there is only one gate providing access to the surrounded area 2 at all times and providing exit from the surrounded area only in a controlled manner.

In the surrounded area 2 there is arranged a milking station 13 that is provided with connection means 4 for automatically connecting a teat cup to a teat of an animal. There is provided a milking device 5 comprising an animal recognition unit for detecting whether an animal has been milked. Said milking device 5 emits a milking signal to a central control unit 6, which milking signal is indicative of the fact whether or not an animal has been milked.

In the surrounded area 2 there is arranged a feeding device 7, controlled by a control unit 8, for automatically supplying feed to an animal. Said feeding device 7 is located remotely from the milking station 13. The control unit 8 also comprises an animal recognition unit for determining the identity of an animal.

The animal recognition units, which may alternatively be arranged separately from the control units, emit an animal recognition signal to the central control unit 6. In order to determine which animals are present in the surrounded area 2, it is possible also to place an animal recognition unit near the gate 9.

According to the invention, the control unit 11 opens the gate 10 with the aid of signals received from the central control unit 6, in order that an animal can leave the surrounded area 2 only when the milking signal indicates that the animal in question has been milked. When an animal that has not yet been milked is located in the vicinity of the gate 10, the gate is not opened and the animal will have to stay in the surrounded area until she has been milked.

The milking device 5 may also be suitable for determining the number of times an animal has successively entered the milking station 13 without a successful milking has been achieved. The milking device 5 emits a sum signal to the central control unit 6, which sum signal is indicative of that number. The central control unit 6 emits a warning signal when said sum signal indicates that the number of times is larger than a particular threshold number. Said warning signal is sent, for example by telephone or by internet, for example to the farmer who is then able to visit the cow in question. It is pointed out here that the animal remains in the surrounded area 2.

The control unit 8 of the feeding device 7 is provided with a feed measuring device known per se (non-shown), such as a weighing device, for detecting whether an animal has eaten. The control unit 8 emits an eating signal to the central control unit 6, which eating signal is indicative of the fact whether or not an animal has eaten. The central control unit 6 controls the control unit 11 for opening the gate 10 in order that an animal can leave the surrounded area 2 only when the eating signal indicates that the animal has eaten. It is pointed out here that, according to one aspect of the invention, the control unit 11 opens the gate 10 only when the milking signal indicates that an animal has been milked, irrespective of whether or not the eating signal indicates that an animal has eaten, and according to another aspect of the invention, the control unit 11 opens the gate 10 only when the eating signal indicates that an animal has eaten, irrespective of whether or not the milking signal indicates that an animal has been milked. It is further pointed out that, within the scope of the invention, by opening the gate is also meant that a gate is unlocked in order that an animal can open the gate herself by pushing.

With the aid of data from the milking device 5, it is possible for the central control unit 6 to determine, additionally, the time elapsed since the milking of the animal. The opening of the gate 10, in order to enable an animal to leave the surrounded area 2, takes place only when the time elapsed is longer than or equal to a threshold time. By properly selecting the threshold time, for example in the order of 30 minutes, it will be possible for the teat openings, the so-called teat orifices, of the animal to close before the animal can leave the surrounded area via the gate 10. The threshold time can be adjusted animal-dependently, so that it is possible, for example, to take into account the period of time, varying per animal, within which the teat orifices will close.

With the aid of the feed measuring device, it is possible for the control unit 8 to determine, additionally, an amount of feed consumed by an animal, and to emit a corresponding signal to the central control unit 6. Under the control of the central control unit 6, the control unit 11 opens the gate 10, in order that an animal can leave the surrounded area only when the amount of feed consumed is larger than or equal to a threshold amount. The threshold amount is in particular animal-dependent. In this manner an animal can leave the surrounded area 2 only when the animal has consumed sufficient feed, for example concentrate. This is in particular important if the animals are grazing in the pasture, during which the total amount of feed consumed by an animal is difficult to determine and it is uncertain whether an animal has consumed an amount of feed necessary for the milk production.

Although the invention has been described in the foregoing with reference to milking and feeding of an animal, it will be obvious that the invention is also applicable to other treatments performed on an animal in the surrounded area, such as leg treatment, administration of medicine, weighing of an animal, and the like. Moreover, it is pointed out that, within the scope of the invention, by supplying feed to an animal is also meant supplying liquid to an animal.

## Claims

1. An assembly for managing a herd of animals moving about freely, which assembly is provided with an animal receiving area surrounded by an enclosure, the enclosure being provided with a gate, with a milking station arranged in the surrounded area, which milking station is provided with a milking device for detecting whether an animal has been milked and for emitting a milking signal, with an animal recognition system for determining the identity of an animal and for emitting an animal recognition signal, and with a control unit for controlling the functioning of the gate with the aid of the animal recognition signal, **characterized in that** the control unit is suitable for opening the gate, in order that an animal can leave the surrounded area only when the milking signal indicates that the animal has been milked.

2. An assembly as claimed in claim 1, **characterized in that** the assembly is provided with a feeding device for automatically supplying feed to an animal, which feeding device is arranged separately from the milking station in the surrounded area.

3. An assembly as claimed in claim 2, **characterized in that** the feeding device is provided with a feed measuring device for detecting whether an animal has eaten and for emitting an eating signal, and **in that** the control unit is suitable for opening the gate, in order that an animal can leave the surrounded area when also the eating signal indicates that the animal has eaten.

4. An assembly as claimed in any one of the preceding claims, **characterized in that** the control unit is suitable for determining the time elapsed since the milking of the animal, and **in that** the control unit is suitable for opening the gate, in order that an animal can leave the surrounded area when also the time elapsed is longer than or equal to a threshold time.

5. An assembly as claimed in claim 4, **characterized in that** the threshold time is animal-dependent.

6. An assembly as claimed in any one of the preceding claims, **characterized in that** the milking station is provided with connection means for automatically connecting a teat cup to a teat of an animal.

7. An assembly for managing a herd of animals moving about freely, which assembly is provided with an animal receiving area surrounded by an enclosure, the enclosure being provided with a gate, with a feeding device arranged in the surrounded area for automatically supplying feed to an animal, with an animal recognition system for determining the identity of an animal and for emitting an animal recognition signal, and with a control unit for controlling the functioning of the gate with the aid of the animal recognition signal, **characterized in that** the feeding device is provided with a feed measuring device for detecting whether an animal has eaten and for emitting an eating signal, and **in that** the control unit is suitable for opening the gate, in order that an animal can leave the surrounded area only when the eating signal indicates that the animal has eaten.

8. An assembly as claimed in claim 3 or 7, **characterized in that** the feed measuring device is suitable for determining the amount of feed consumed by an animal, and **in that** the control unit is suitable for opening the gate, in order that an animal can leave the surrounded area only when the amount of feed consumed is larger than or equal to a threshold amount.

9. An assembly as claimed in claim 8, **characterized in that** the threshold amount is animal-dependent.

10. An assembly for managing a herd of animals moving about freely, which assembly is provided with an animal receiving area surrounded by an enclosure, the enclosure being provided with a gate, with a treatment device arranged in the surrounded area for performing a treatment on an animal, with an animal recognition system for determining the identity of an animal and for emitting an animal recognition signal, and with a control unit for controlling the functioning of the gate with the aid of the animal recognition signal, **characterized in that** the treatment device is provided with a treatment detecting device for detecting whether an animal has undergone the treatment and for emitting a treatment signal, and **in that** the control unit is suitable for opening the gate, in order that an animal can leave the surrounded area only when the treatment signal indicates that the animal has undergone the treatment.

11. An assembly as claimed in any one of the preceding claims, **characterized in that** the assembly is provided with a surrounded resting area with cubicles, the gate being located between the surrounded area and the surrounded resting area for the purpose of providing an animal access to the resting area.

12. An assembly as claimed in claim 11, **characterized in that** the assembly is provided with a one-way gate for providing access to the surrounded area from the resting area.

13. A method of managing a herd of animals moving about freely, the method comprising the step of receiving animals in an area surrounded by an enclosure, which enclosure is provided with a gate, the step of milking an animal in a milking station arranged in the surrounded area, the step of determining the identity of an animal, and the step of controlling the functioning of the gate with the aid of the animal recognition signal, **characterized in that** the step of controlling the functioning of the gate comprises the opening of the gate, in order that an animal can leave the surrounded area only when the animal has been milked.

14. A method as claimed in claim 13, **characterized in that** the method comprises the step of automatically supplying feed to an animal by means of a feeding device arranged separately from the milking station in the surrounded area.

15. A method as claimed in claim 14, **characterized in that** the method comprises the step of detecting whether an animal has eaten, and **in that** the step of controlling the functioning of the gate comprises the opening of the gate, in order that an animal can leave the surrounded area when the animal has also eaten.

16. A method as claimed in claim 14 or 15, **characterized in that** the method comprises the step of determining the time elapsed since the milking of the animal, the gate being opened only when it is established that also the time elapsed is longer than or equal to a threshold time.

17. A method as claimed in claim 16, **characterized in that** the threshold time is set animal-dependently.

18. A method as claimed in any one of claims 13 to 17, **characterized in that** the milking comprises the step of automatically connecting a teat cup to a teat of an animal.

19. A method of managing a herd of animals moving about freely, the method comprising the step of receiving animals in an area surrounded by an enclosure, which enclosure is provided with a gate, the step of automatically supplying feed to an animal by means of a feeding device arranged in the surrounded area, the step of determining the identity of an animal, and the step of controlling the functioning of the gate with the aid of the animal recognition signal, **characterized in that** the step of controlling the functioning of the gate comprises the opening of the gate, in order that an animal can leave the surrounded area only when the animal has eaten.

20. A method as claimed in claim 14 or 19, **characterized in that** the method comprises the step of determining the amount of feed consumed by an animal, the gate being opened only when it is established that the amount of feed consumed is larger than or equal to a threshold amount.

21. A method as claimed in claim 20, **characterized in that** the threshold amount is set animal-dependently.

22. A method of managing a herd of animals moving about freely, the method comprising the step of receiving animals in an area surrounded by an enclosure, which enclosure is provided with a gate, the step of automatically performing a treatment on an animal by means of a treatment device arranged in the surrounded area, the step of determining the identity of an animal, and the step of controlling the functioning of the gate with the aid of the animal recognition signal, **characterized in that** the step of controlling the functioning of the gate comprises the opening of the gate, in order that an animal can leave the surrounded area only when the animal has undergone the treatment.

23. A method as claimed in any one of claims 13 to 22, **characterized in that,** by opening the gate, the animal is provided access to a resting area comprising cubicles.
